# EUROPÄISCHE PATENTANMELDUNG

(11) **EP 3 664 012 A1**
(43) Veröffentlichungstag der Anmeldung: **10.06.2020**
(21) Anmeldenummer: 19214035.8
(22) Anmeldetag: 06.12.2019
(51) Int. Cl.: G06Q 50/16, G16Y 10/80, G16Y 20/10, G16Y 40/20

(54) **PROJEKTFILE FÜR BELEUCHTUNGSANLAGEN**

(30) Priorität: 06.12.2018 DE 102018009603; 15.02.2019 DE 102019103887
(71) Anmelder: Siteco GmbH, 83301 Traunreut (DE)
(72) Erfinder: Bornemann, Lars, 83254 Breitbrunn (DE); König, Christian, 84558 Kirchweidach (DE)
(74) Vertreter: Schmidt, Steffen

(57) **Zusammenfassung**

Die Erfindung betrifft ein Verfahren zum computergestützten Planen, Einrichten und Überwachen eines Netzwerkes einer Gebäudeinstallation, insbesondere einer Beleuchtungsanlage, das folgende Schritte umfasst: Erfassen von Planungsdaten für die Einrichtung der Gebäudeinstallation eines Projekts und Speichern der Planungsdaten in einer projektbezogenen Blockchain; Analysieren der Planungsdaten aus der Blockchain und Ausgabe eines Installationsplans für ein Netzwerk aus einer Vielzahl von Komponenten der Gebäudeinstallation;
nach Annahme des Installationsplans durch einen Benutzer, Ermitteln der zur Gebäudeinstallation benötigten Betriebsmittel und deren Einbauorte, Zuordnen von eindeutigen Betriebsmittelkennzeichnungen den Betriebesmitteln und Speichern der Betriebsmittelkennzeichnungen mit zugehörigen Einbauorten in der Blockchain; Erstellen einer Bestellliste der benötigten Betriebsmittel aus der Blockchain; nach erfolgter Einrichtung der Gebäudeinstallation, Speichern von Änderungen an den Betriebsmitteln der Gebäudeinstallation in der Blockchain um den jeweils aktuellen Konfigurationszustand der Betriebsmittel in der Blockchain zu erhalten.

## Beschreibung

Die vorliegende Erfindung betrifft allgemein das Gebiet von Gebäudeinstallationsanlagen, worunter insbesondere Beleuchtungsanlagen in und am Gebäude sowie gegebenenfalls weitere zusätzliche Gebäudetechnik im Gebäude, im gebäudenahen Bereich sowie im Außenbereich verstanden wird. Insbesondere betrifft die Erfindung ein Verfahren welches dazu dient, die zur Planung, Einrichtung und Überwachung eines Netzwerkes einer Gebäudeinstallation benötigten Daten zu erfassen, zu speichern und auszugeben.

Gebäudeinstallationen, einschließlich der Beleuchtungstechnik, benötigen für größere Bauvorhaben eine umfangreiche Planung. Während des Lebenszyklus der Anlage sind laufende Wartungs- und Reparaturarbeiten die Regel. Schließlich stellt bei einem Rückbau der Gebäude sogar die Entsorgung ein kompliziertes Unterfangen dar, zu welchem die spezifischen Anlagenparameter bekannt sein müssen. Derzeit sind viele nicht miteinander vernetze Arbeitsschritte notwendig, um das unterschiedliche Wissen für die Planung der Gebäudetechnik, die Wartung und Entsorgung durchzuführen. Ein Problem besteht bereits darin, dass viel Wissen und Information zu einer Anlage über den laufenden Betrieb verloren geht und viel Klärungsbedarf zwischen den einzelnen Personen, welche die Anlage planen und betreiben, notwendig ist. Die Folge sind zeitaufwendige Notizen während der anfänglichen Planungsphase. Wenn die Anlage nicht so funktioniert, wie sie soll, sind häufig auch Streitigkeiten zwischen dem Hersteller der Anlage und dem Betreiber der Anlage zu erwarten.

Aufgabe der vorliegenden Erfindung ist es, ein computergestütztes Verfahren bzw. ein Softwaretool bereitzustellen, welches die Planung, den Betrieb und ggf. den Rückbau einer Gebäudeinstallation vereinfacht.

Gelöst wird die Aufgabe durch ein Verfahren nach Anspruch 1, sowie durch ein Computerprogramm nach Anspruch 15 und ein Netzwerk nach Anspruch 16.

Ein besonderer Vorteil des computergestützten Verfahrens zum Planen, Einrichten und Überwachen eines Netzwerkes einer Gebäudeinstallation gemäß der vorliegenden Erfindung besteht darin, dass sämtliche relevanten Daten, welche in der Planungsphase und beim Einrichten der Gebäudeinstallation erhoben werden, in einer Blockchain gespeichert werden. Ferner wird in der Blockchain auch der aktuelle Zustand der Gebäudeinstallation, welcher sich durch Änderungen der Anlage ergeben kann, gespeichert. Dadurch ist eine lückenlose Dokumentation über den gesamten Lebenszyklus der Anlage vorhanden, auf die in jeder Projektphase zurückgegriffen werden kann. Insbesondere können aus diesen Daten beispielsweise alle notwendigen Bestelldaten noch vor Einrichten der Anlage automatisch erzeugt werden. Das Verfahren kann nach Bedarf mit einem Warenwirtschaftssystem des Herstellers der Anlage direkt verknüpft sein. Nach der Installation können alle Servicearbeiten an der Anlage aus den vorhandenen Daten geplant werden. Ferner bieten die Daten den Vorteil, dass auch streitige Fragen von Kundenreklamationen und Gewährleistungsansprüchen beim Auftreten von Defekten geklärt werden können. Technisch wird die Dokumentation der Daten dadurch realisiert, dass alle Daten für ein Projekt in einer Blockchain abgelegt werden. Die Blockchain ist manipulationssicher, weil aufgrund der Datenstruktur einer Blockchain eine nachträgliche Fälschung der Daten nahezu unmöglich ist. Jeder neu hinzugefügte Datenblock einer Blockchain enthält einen Hash des vorhergehenden Datenblocks.

Dadurch ist eine nachträgliche Änderung der vorhergehenden Blöcke nicht möglich. Ferner eignet sich diese Art von Datenaufzeichnung insbesondere für Daten, welche in zeitlicher Abfolge hintereinander aufgezeichnet werden müssen. Erfindungsgemäß wurde erkannt, dass diese Art von Datenaufzeichnung für die Dokumentation einer Gebäudeinstallation von besonderem Vorteil ist.

Gemäß einer bevorzugten Ausführungsform umfasst das Verfahren ferner: Speichern von ausgewerteten Sensordaten aus Sensoren, die Teil der Gebäudeinstallation sind, in der Blockchain. Dadurch kann auch der Betriebszustand der Gebäudeinstallation zu jedem Zeitpunkt aus den Daten einer Blockchain ermittelt werden.

Gemäß einer bevorzugten Ausführungsform umfasst das Verfahren ferner ein statistisches Analysieren der Sensordaten aus der Blockchain und Speichern der Analyseergebnisse in der Blockchain. Die Sensordaten werden wenigstens zum Teil für den Betrieb der Anlage ohnehin erhoben, z.B. um bewegungsabhängig Beleuchtungseinrichtungen zu schalten. Das Aufzeichnen der Daten bzw. der ausgewerteten Daten ermöglicht es, zu einem späteren Zeitpunkt nachzuvollziehen, in welchem Betriebszustand sich die Anlage befunden hat. Dies ist z.B. für eine mögliche nachfolgende Auswertung der Leistungsfähigkeit der Anlage sowie zur Fehlerdetektion hilfreich.

Gemäß einer bevorzugten Ausführungsform umfasst das Verfahren ferner das Erzeugen von elektronischen Benachrichtigungen aus der Blockchain, wobei die Benachrichtigung den aktuellen Konfigurationszustand der Gebäudeinstallation anzeigen.

Gemäß einer bevorzugten Ausführungsform umfasst das Verfahren ferner das Durchführen von Selbstfunktionstest von Betriebsmitteln in der Gebäudeinstallation und Speichern des Ergebnisses des Selbstfunktionstest in der Blockchain.

Gemäß einer bevorzugten Ausführungsform umfasst das Verfahren ferner das Versenden einer elektronischen Benachrichtigung, welche den aktuellen Funktionszustand von Betriebsmitteln in der Blockchain anzeigt. Die Nachrichten können beispielsweise an Servicetechniker übersandt werden. Auf diese Weise kann die laufende Wartung sowie notwendige Reparaturarbeiten an der Installation koordiniert werden.

Gemäß einer bevorzugten Ausführungsform umfasst das Verfahren ferner das Ermitteln eines Energieverbrauchs von Betriebsmitteln oder Gruppen von Betriebsmitteln der Gebäudeinstallation aus gespeicherten Sensordaten der Blockchain. Dadurch kann der Betreiber der Anlage nachvollziehen, ob die vom Hersteller angegebenen Angaben zum Energieverbrauch auch erzielt werden. Ferner lassen sich aus den einzelnen Energieverbräuchen der Betriebsmittel auch diejenigen Verbraucher auffinden, die zu einem zu hohen Energieverbrauch führen, um ggf. Änderungen an der Gebäudeinstallation vorzusehen.

Gemäß einer bevorzugten Ausführungsform umfasst das Verfahren ferner das Speichern einer Parametrierung von Betriebsmitteln der Gebäudeinstallation in der Blockchain.

Gemäß einer bevorzugten Ausführungsform umfasst das Verfahren ferner das Kopieren der Parametrierung von einer Gruppe von Betriebsmitteln der Gebäudeinstallation auf eine andere Gruppe von Betriebsmitteln der Gebäudeinstallation, insbesondere nach Umzügen von Mitarbeitern in einem Gebäude der Gebäudeinstallation. Es entfällt die notwendige Neuparametrierung, wenn die Gebäudeinstallation in einem neuen Gebäudeteil genau in der gleichen Weise, beispielsweise nach Umzug eines Mitarbeiters, wie in einem alten Gebäudeteil funktionieren soll.

Gemäß einer bevorzugten Ausführungsform umfasst das Verfahren ferner eine Fehleranalyse von der Gebäudeinstallation aus Daten der Blockchain, insbesondere eine Ermittlung von statistischen Auffälligkeiten aus gespeicherten Sensordaten von miteinander in Beziehung stehenden Sensordaten und Funktionszuständen benachbart angeordneten Sensoren und Betriebsmitteln der Gebäudeinstallation, sowie ggf. ein Erzeugen einer elektronischen Benachrichtigung für eine mögliche Fehlfunktion von Betriebsmittelkomponenten.

Gemäß einer bevorzugten Ausführungsform umfasst das Verfahren ferner das Erzeugen von Benachrichtigungen für Servicemitarbeiter zur Durchführung von regelmäßigen oder außerplanmäßigen Serviceintervallen aus den Daten der Blockchain.

Gemäß einer bevorzugten Ausführungsform umfasst das Verfahren ferner das Speichern von Daten in der Blockchain, wobei die Daten eines oder mehreres aus folgender Gruppe umfassen: Lichtmessung, Temperaturmessung insbesondere von Komponenten der Gebäudeinstallation, Bewegungserfassung, Bewegungssignalqualität, Kommunikationssignalqualität, Betriebszähler von Komponenten der Gebäudeinstallation, Störsignale auf einem Versorgungsnetz der Gebäudeinstallation, Umgebungsbedingungen, insbesondere Feuchtigkeit, flüchtige organisierte Verbindungen und Umgebungstemperatur, mechanische Erschütterungen, sowie Ergebnisse automatischer Funktionstest von Komponenten der Gebäudeinstallation.

Gemäß einer bevorzugten Ausführungsform umfasst das Verfahren ferner, dass die Blockchain in einer Datenbank einer Cloud und/oder an mehreren verteilten Orten in Kopien gespeichert wird. Das Speichern der Blockchain an verteilten Orten erhöht die Manipulationssicherheit der Daten, weil eine Blockchain nicht an einem einzelnen Speicherort manipuliert werden kann. Das Grundprinzip der verteilten Speicherorte ist zum Nutzen der vorliegenden Erfindung, weil die Daten in der Blockchain auch zum Nachweis von Gewährleistungsansprüchen oder zur Abwehr von solchen herangezogen werden können.

Gemäß einer bevorzugten Ausführungsform umfasst das Verfahren ferner, dass die Daten in der Blockchain verschlüsselt gespeichert werden, so dass nur autorisierte Benutzer der Blockchain, insbesondere der Hersteller, der Betreiber und/oder Servicetechniker der Gebäudeinstallation, Zugang zu den Daten der Blockchain oder nur jeweils auf Teile der Daten der Blockchain Zugang haben.

Weitere Vorteile und Merkmale der vorliegenden Erfindung werden aus der nachfolgenden Beschreibung bevorzugter Ausführungsformen deutlich, die in Verbindung mit den beigefügten Figuren gegeben wird. In den Figuren ist Folgendes dargestellt:
- Figuren 1a bis 1i: zeigen Benutzerschnittstellen einer Software zur Erhebung von Planungsdaten einer Gebäudeinstallation.
- Figur 2: zeigt schematisch einen Teil eines Projektfiles betreffend eine Mengen- und Typenermittlung.
- Figur 3: zeigt schematisch einen Teil des Projektfiles betreffend Kundenreklamationen.
- Figur 4: zeigt schematisch einen Teil des Projektfiles betreffend Bewegungssensorik.
- Figur 5: zeigt schematisch einen Teil des Projektfiles betreffend Lichtsensor-Profile.
- Figur 6: zeigt schematisch einen Teil des Projektfiles betreffend Umgebungseinflüsse.
- Figur 7: zeigt schematisch einen Teil des Projektfiles betreffend Sensorauswahl.
- Figur 8: zeigt schematisch einen Teil des Projektfiles betreffend Planungsdatei.
- Figur 9: zeigt schematisch einen Teil des Projektfiles betreffend Temperaturprofile.
- Figur 10: zeigt schematisch einen Teil des Projektfiles betreffend Schnittstellen.
- Figur 11: zeigt schematisch einen Teil des Projektfiles betreffend Applikationsprofil.
- Figur 12: zeigt schematisch einen Teil des Projektfiles betreffend Werksparametrierung.
- Figur 13: zeigt schematisch einen Teil des Projektfiles betreffend Planungsabgleich-Lichtsensorik.
- Figur 14: zeigt schematisch einen Teil des Projektfiles betreffend Störeinflüsse.
- Figur 15: zeigt schematisch einen Teil des Projektfiles betreffend Reklamationsmanagement.

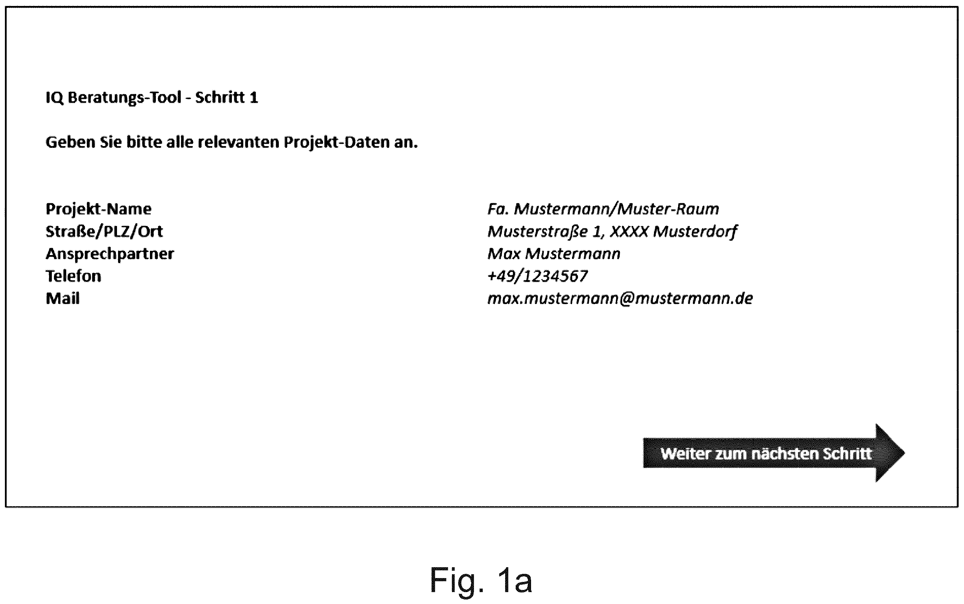

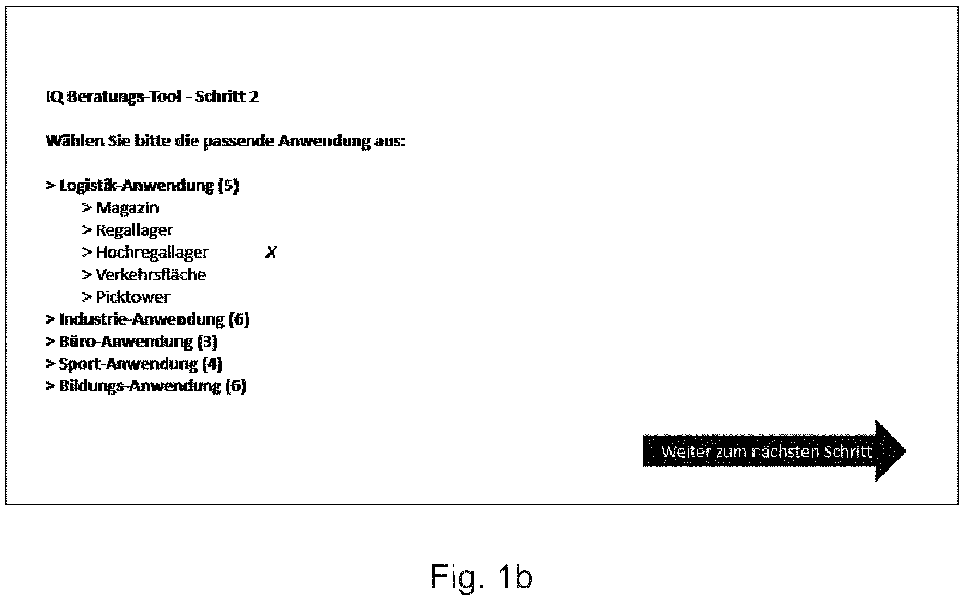

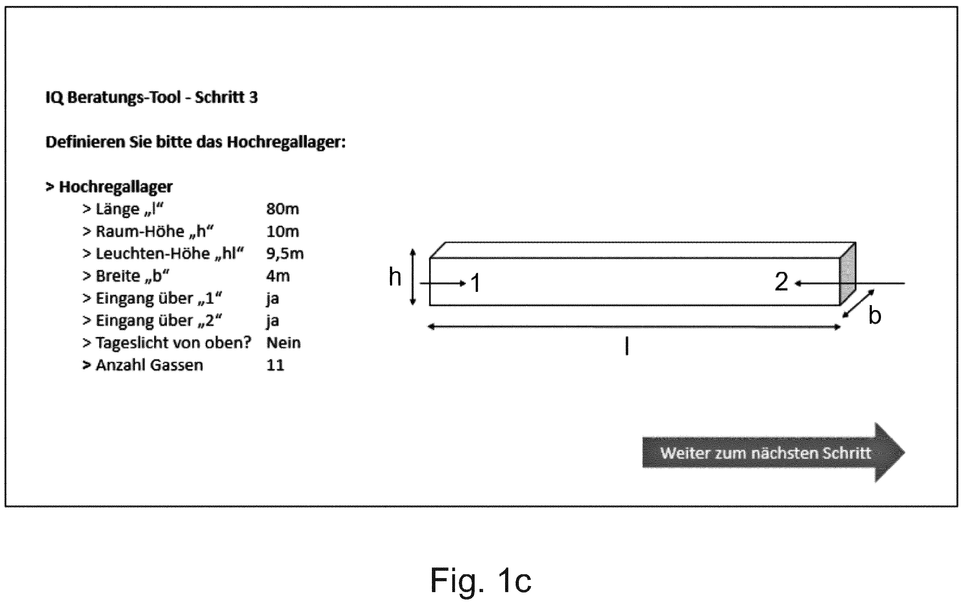

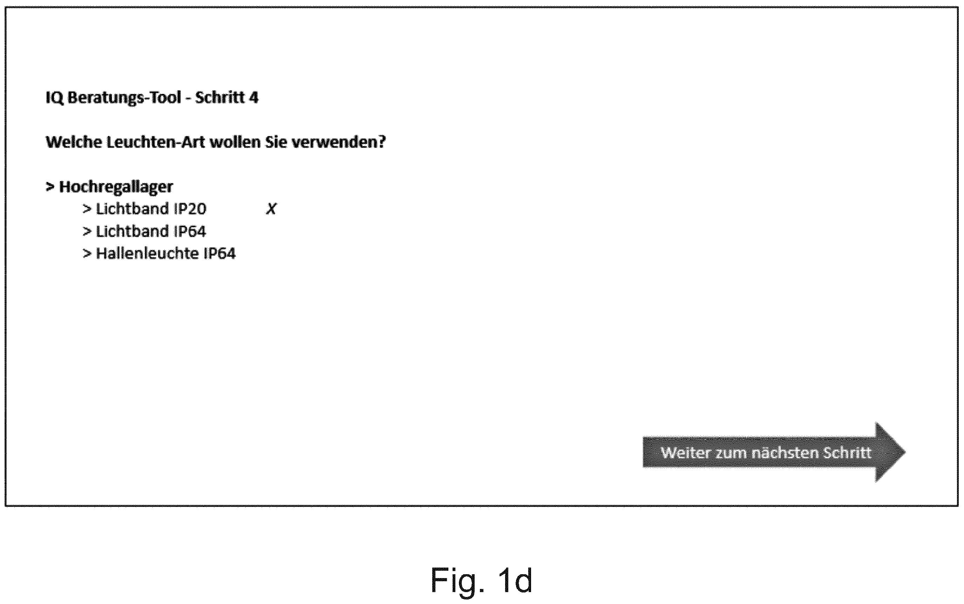

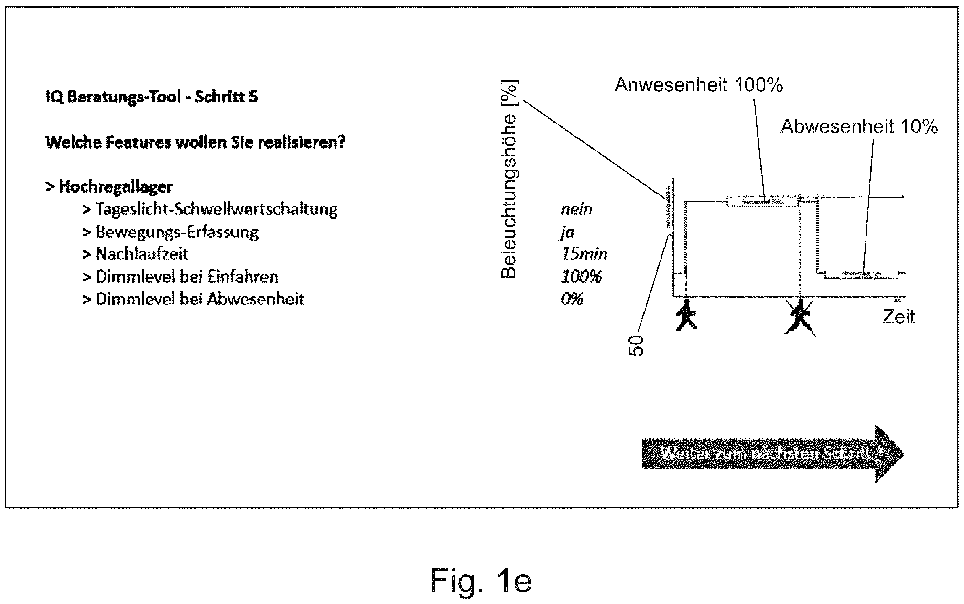

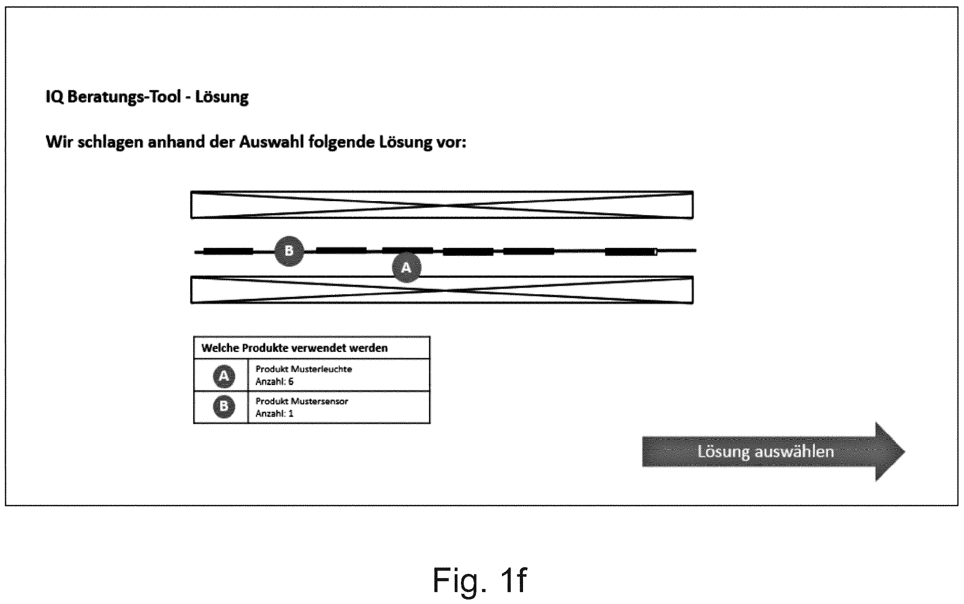

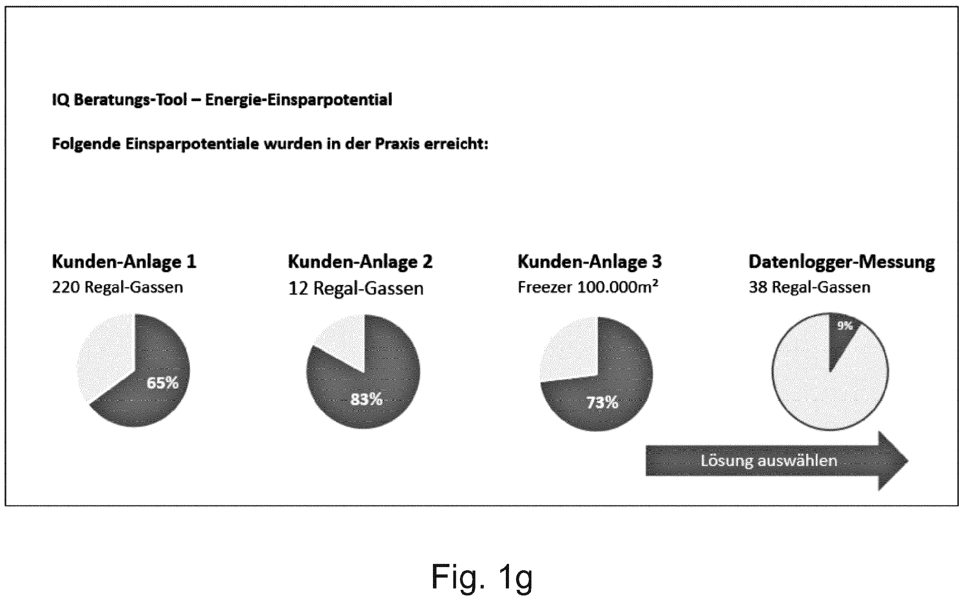

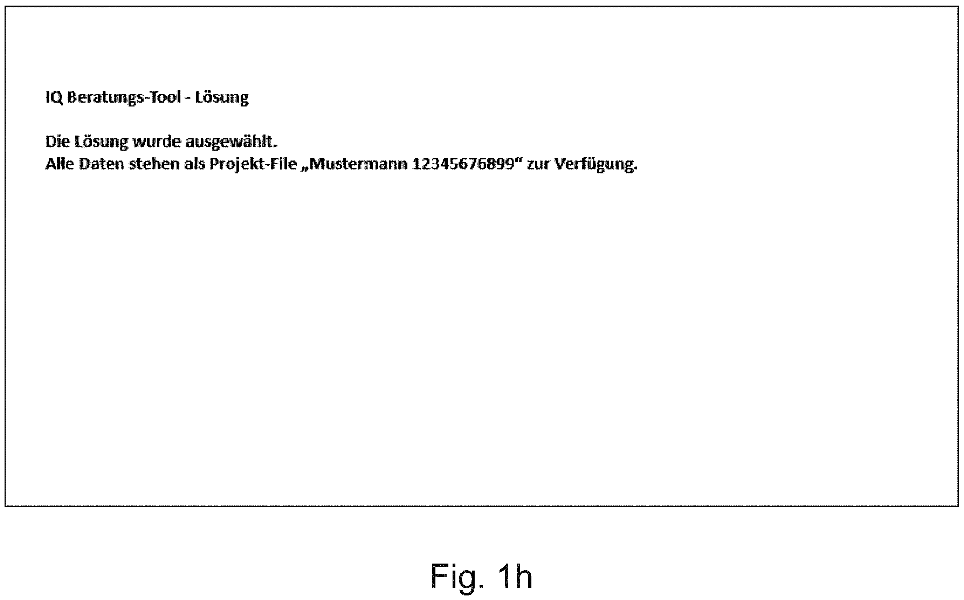

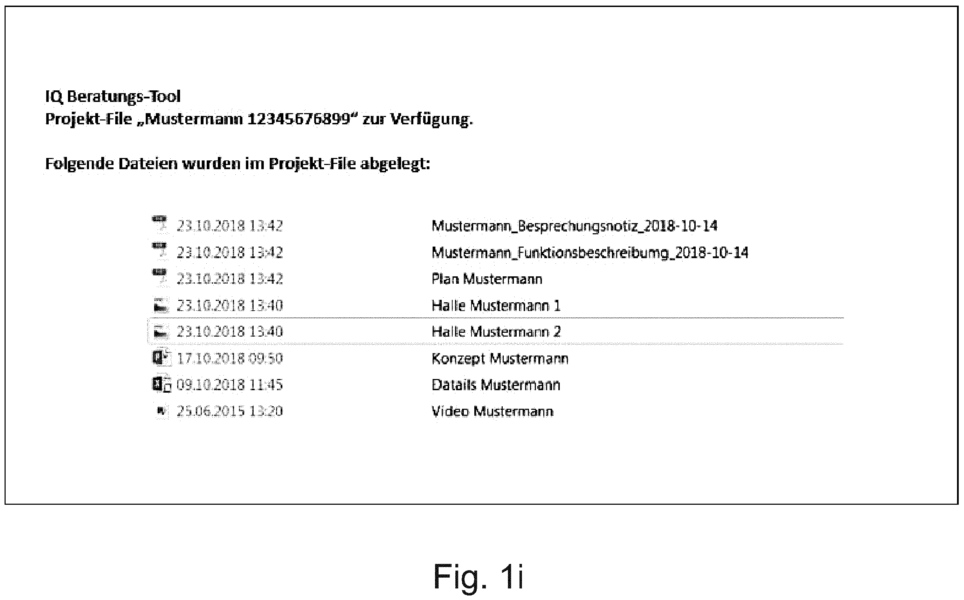

Bezugnehmend auf die Figuren 1a bis 1i wird eine Benutzerschnittstelle beschrieben, die gemäß einer Ausführungsform der Erfindung zur Erhebung von Planungsdaten eine Gebäudeinstallation vor Einrichtung der Installation verwendet werden kann. Ein Beratungs-Tool fragt schrittweise Daten für die Planung einer Beleuchtungsinstallation in einem Gebäude ab. In dem vorliegenden Beispiel wird nach Erfassung der Projektdaten, wie die Adresse und die Kontaktdaten des Kunden (siehe Figur 1a) abgefragt, welche Art von Gebäuden mit Beleuchtungseinrichtungen ausgerüstet werden sollen (siehe Figur 1b). Im nächsten Schritt wird die Bemaßung der Räume festgelegt (siehe Figur 1c) und die notwendige Schutzklasse der Leuchten (siehe Figur 1d) abgefragt. Schließlich werden noch weitere Merkmale festgelegt, welche die automatische Schaltung der Leuchte, z.B. durch Tageslicht-Schwellwertschaltung und durch Bewegungserfassung, betreffen. Darin werden auch die Nachlaufzeiten sowie die Dimm-Level für die Leuchte festgelegt (siehe Figur 1e). Auf Grundlage dieser Rahmenparameter ermittelt die Software automatisch einen Vorschlag für die Beleuchtungseinrichtungen in dem betreffenden Gebäude und deren Anordnung innerhalb des Gebäudes (siehe Figur 1f) und gibt ein voraussichtlich zu erzielendes Energie-Einsparpotenzial aus (siehe Figur 1g). Die ermittelten Daten werden in einem Projekt-File abgelegt und sind in diesem File unter der Projektbezeichnung abrufbar (siehe Figuren 1h und 1i). Alle einmal erfassten Daten werden dauerhaft in einer Blockchain gespeichert und bleiben über den gesamten Lebenszyklus der Anlage erhalten. Das Datenfile in Form einer Blockchain ermöglicht eine lückenlose Dokumentation der relevanten technischen Daten über die Planungsphase hinaus. Während der Planungsphase können die bei der Beratung erhobenen Daten sowie ggf. weiter Datenlocker-Messungen und sämtliche Informationen, die für die Planung relevant sind, in das Projektfile der Blockchain gespeichert und zur Planung einbezogen werden. Dabei ist zu berücksichtigen, dass sämtliche Informationen über das Projektfile von bereits durchgeführten Projekten zur manuellen oder automatischen Planung herbeigezogen werden können. Hierzu werden alle notwendigen Informationen aus einer Datenbank, welche das Daten-File speichert, von allen an dem Projekt beteiligten Personen bezogen. Nach Bedarf ist auch eine Übersetzung in eine andere Sprache möglich, so dass die Bearbeitung auch an einem anderen Standort oder in einem anderen Land stattfinden kann.

Bei der Planung werden entsprechend dem Planungsprogramm jedem Betriebsmittel eine eindeutige Kennzeichnung zugewiesen. Auch die Betriebsmittelkennzeichnung wird in dem Datenfile automatisch gespeichert. Sie können im nächsten Schritt der Bestellphase der Anlage Verwendung finden. Vorzugsweise wird aus dem Daten-File eine Stückliste erstellt, welche die exakten Angaben der Anzahl und des Typs der benötigten Beleuchtungseinrichtungen sowie ggf. weitere Sensorik oder anderer Gebäudetechnik umfasst. Eine Verbindung zu einem Warenwirtschaftssystem kann automatisch hergestellt werden. Ferner kann eine Beschreibung des Leistungsumfangs ausgegeben werden. Darin sind alle Produkte, Anlagen, Funktionen, Garantieleistungen und Montage- und Betriebnahmeleistungen aufgelistet. Die Daten sind sowohl für den Kunden der Anlage als auch für den Anbieter ersichtlich.

Erfolgt die Bestellung der Produkte aus dem Angebot, werden alle relevanten Daten bei Bedarf an das Warenwirtschaftssystem exportiert, um alle relevanten Einkaufs- und Beschaffungsinformationen zu bekommen. Alle darin abgelegten Informationen zu Produkten und Einstellungen ggf. notwendigen Inbetriebnahme-Dienstleistungen sind auf einen Blick ersichtlich.

Automatisch nach der Bestellung werden mögliche Termine für Service-Dienstleistungen abgestimmt. Alle verfügbaren ServiceMitarbeiter werden automatisch mit Hilfe eines Kalenders ausgesucht. Eine optimale Auslastung des Personals wird dadurch ermöglicht.

Während der Produktion der Produkte der Gebäudeinstallation werden alle notwendigen Daten aus dem Daten-File ausgelesen und die Produkte können beispielsweise mit einem Aufkleber entsprechen markiert werden. Jedes Produkt und sein späterer Installationsort ist damit eindeutig identifizierbar.

Aus dem Daten-File können ferner alle relevanten Informationen zur Parametrierung der Anlage abgelesen werden. Beispielsweise können die vorher spezifizierten An- und Ausschaltzeiten sowie Nachlaufzeiten und Dimm-Level an dem betreffenden Produkt gespeichert werden. Dies erleichtert die Montage der Produkte durch einen Servicetechniker vor Ort. Aus der Identifikation des Produkts kann unmittelbar auf dem Montageort geschlossen werden. Falls vor oder während der Installation der Anlage noch Änderungen vorgenommen werden, werden diese ebenfalls in dem Daten-File erfasst, so dass auch später jederzeit nachvollziehbar ist, welche Produkte an welchem Ort installiert worden sind.

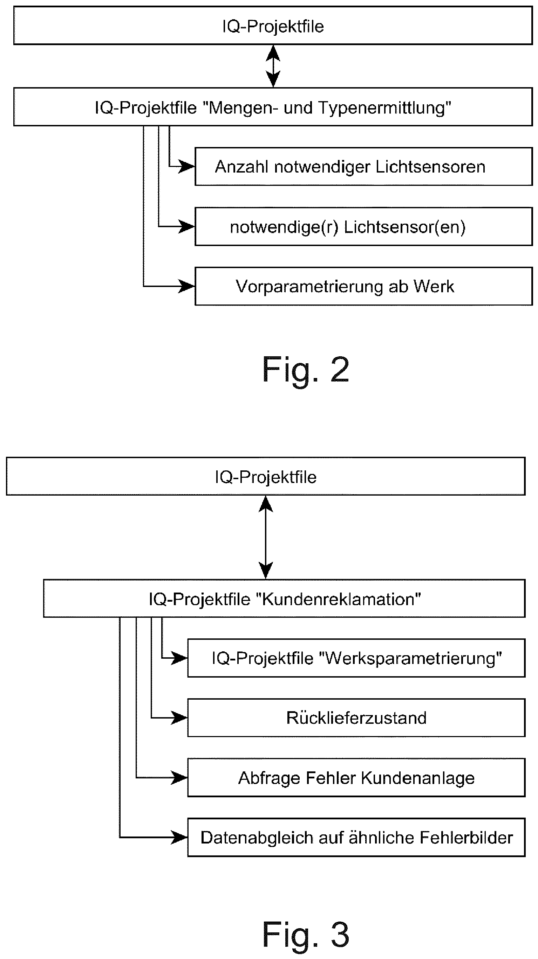

Nach Inbetriebnahme der Anlage können sich die Betriebsgeräte selbst überprüfen und einen aktuellen Fehlerzustand melden, welcher ebenfalls in das Daten-File abgelegt wird. Auf diese Weise können geeignete Maßnahmen durch Servicetechniker ergriffen werden. Ein Austausch eines defekten Betriebsmittels kann direkt erfolgen. Beispiele für die Erfassung von Messwertdaten, welche auf einen Fehler schließen lassen, sind in den Figuren 2a bis 2c dargestellt. Die Messwerte können insbesondere die Signalqualität der Steuerdaten sowie die Stabilität der Versorgungsspannung umfassen. Bei Feststellen von Ereignissen außerhalb einer Vorgabe werden geeignete Maßnahmen vorgeschlagen. Diese Maßnahmen können in Form einer elektronischen Benachrichtigung direkt an einen Servicetechniker übermittelt werden. Ferner werden auch diese Maßnahmen in dem Projekt-File (sogenanntes IQ-Projekt-File, welches als Blockchain realisiert ist) gespeichert und vorzugsweise in einer Cloud-Datenbank abgelegt.

Eine Besonderheit der Erfindung besteht ferner darin, dass über die Planungsphase hinaus alle relevanten Daten der Gebäudeinstallation in der Blockchain erhalten werden. Im Folgenden wird beschrieben, welche weiteren Daten gemäß Ausführungsformen der Erfindung in der Blockchain noch gespeichert werden und wie deren technische Implikation auf ein Verfahren ist, welches zum Warten, Verändern, ggf. Reparieren, und schließlich zum Entsorgen der Gebäudeinstallationen vorgesehen ist.

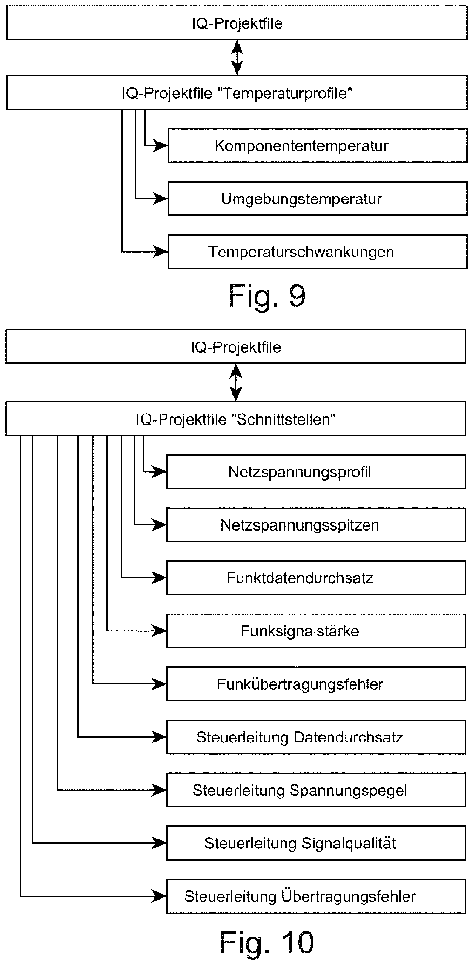

Das Projektfile (in den Figuren auch als IQ-Projekt-File bezeichnet), welches in der Blockchain enthalten ist, kann insbesondere Daten hinsichtlich von Mengen und Typen von Sensoren in der Gebäudeinstallation umfassen (siehe Figur 9). Die Anzahl, die Art und die Programmierung der Sensoren, z.B. die Ausrichtung des Sensor und die Empfindlichkeit des Sensors, sind in dem Projektfile abgelegt. Diese Daten sind bereits bei der Installierung der Anlage notwendig und dienen beispielsweise dazu, um die Typenbezeichnung und die Bestellnummern der betreffenden Sensoren in der Bestellphase des Projekts zu ermitteln. Ferner ist die Vorprogrammierung der entsprechenden Bauteile ab Werk bereits in dem Projektfile hinterlegt. Dadurch können die Komponenten bereits ab Werk die entsprechende Vorprogrammierung aufweisen, so dass sie bei der Einrichtung der Gebäudestation nur eingesetzt werden müssen. Die aufwändige Programmierung aller Komponenten vor Ort kann entfallen.

Die Daten in dem Projektfile erlauben es, Ansprüche bei einer Kundenreklamation geltend zu machen. Dazu ist in dem Projektfile die werkseitige Parametrierung, der Rücklieferzustand, abgefragte Fehler der Kundenanlage und ein Datenabgleich auf ähnliche Fehler enthalten. Aus diesen Daten lässt sich ermitteln, ob eine Fehlfunktion einer Komponente in der Gebäudeinstallation auf eine falsche Programmierung zurückzuführen ist. Insbesondere ist nachvollziehbar, ob der Rücklieferzustand der ursprünglichen Werksparametrierung entspricht, um das Feststellen eines Fehlers nachzuweisen. Ferner können Fehler an der Kundenanlage, die beispielsweise durch einen Selbsttest der Komponenten ermittelt und das Projektfile geschrieben worden sind, aus dem Projektfile direkt ermittelt werden. Darüber ist es auch möglich, aufgrund eines Datenabgleichs mit ähnlichen Fehlerbildern festzustellen, ob auch andere Komponenten der Anlage Anlass zur Reklamation liefern. Noch bevor ein Totalausfall der entsprechenden Komponenten vorliegt, kann aus den Datenabgleich mit ähnlichen Fehlern geschlossen werden, welche Teile der Anlage von einem möglichen Fehler betroffen sind, um Reparaturmaßnahmen zu ergreifen und ggf. Garantieansprüche geltend zu machen.

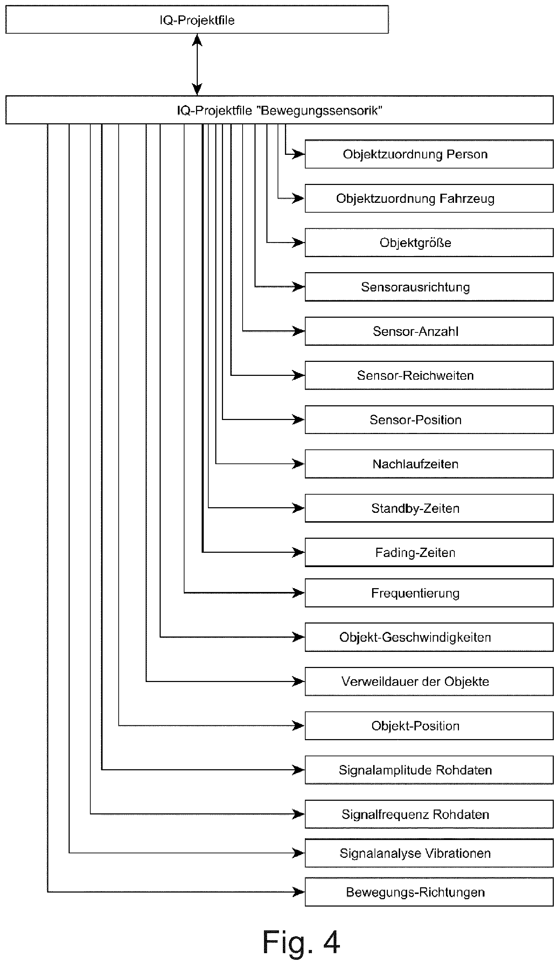

Bezug nehmend auf Figur 4 ist dargestellt, welche vielfältigen Daten einer Bewegungssensorik in der Gebäudeanlage in dem Projektfile aufgezeichnet werden können. Diese Daten dienen einerseits direkt zur Steuerung der Gebäudeinstallationsanlage. Ferner werden die Daten aufgezeichnet, um auch später rekonstruieren zu können, ob die Anlage ordnungsgemäß betrieben worden ist. Etwaige Fehlfunktionen der Anlage können aus den Daten ermittelt werden. Ferner kann ermittelt werden, ob die bei der Planung vorgesehenen Gegebenheiten, z.B. die durchschnittliche Anzahl von detektierten Personen oder Fahrzeugen etc., in der Praxis auch eingehalten werden. Ein vorzeitiger Ausfall der Komponenten kann dadurch erklärt werden, wenn die aufgrund der Bewegungssensorik erfolgten Schaltzeiten wesentlich größer sind, als für die betreffende Komponente ursprünglich eingeplant war.

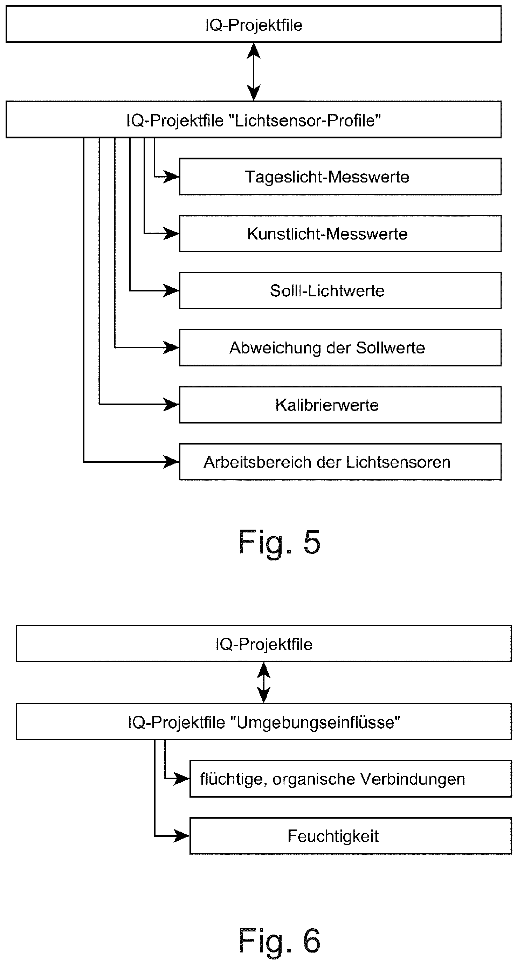

Figur 5 zeigt, dass Messwerte von Lichtsensoren in dem Projektfile der Blockchain gespeichert werden können. In Figur 6 ist ferner ein Teil des Projektfiles dargestellt, in welchem Messungen von Umweltsensoren, insbesondere der Feuchtigkeit und der Messungen von flüchtigen, organischen Verbindungen enthalten ist. Auf diese Weise kann eine Veränderung der vorherrschenden Feuchtigkeit oder das Vorhandensein von flüchtigen, organischen Verbindungen analysiert werden. Beispielsweise kann bei einem häufigen Ausfall von Komponenten in einem bestimmten Raumbereich der Anlage bei gleichzeitig vorhandenen hohen Feuchtigkeitswerten darauf geschlossen werden, dass der Ausfall durch veränderte Umweltbedingungen hervorgerufen worden ist. Diese Daten können mit den aus den Planungsdaten bekannten Daten der Gebäudeinstallation betreffend der Schutzklasse der jeweiligen Komponente verglichen werden. Wenn sich herausstellt, dass z.B. eine Beleuchtungseinrichtung mit einer zu niedrigen Schutzklasse in einem Gebäudeteil eingesetzt wird, welches einen höheren Feuchtigkeitswert als ursprünglich geplant aufweist, kann unmittelbar eine entsprechende Ersetzung der betreffenden Komponenten initiiert werden.

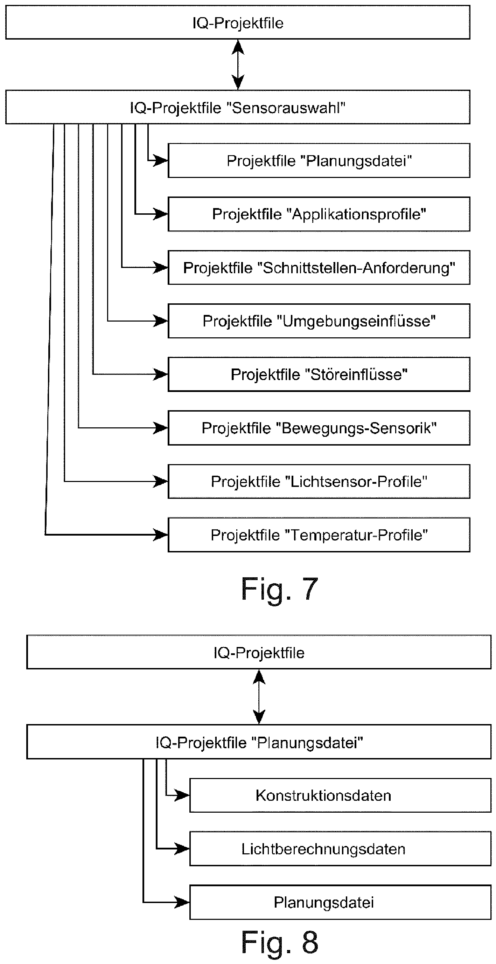

Figur 7 zeigt den Teil des Projektfiles, in welchem die Sensorauswahl für die Anlage gespeichert ist. Es wird detailliert gespeichert, welche Sensoren enthalten sind und wo die Sensoren eingebaut sind. Aus den entsprechenden Profilen der Messdaten können Rückschlüsse auf den Betrieb der Anlage gezogen werden. Diese Daten können auch statistisch ausgewertet werden, um ein Fehlverhalten der Anlage vorherzusagen. Dabei kommt auch künstliche Intelligenz zur Anwendung, weil durch immer wieder gleiche Messwertprofile, in deren Folge sich Fehler ereignen, auf die Ursache der Fehler geschlossen werden kann.

In den Figuren 8 bis 11 sind Einzelheiten betreffend der Planungsdatei, der Temperaturprofile, der Schnittstellen und dem Applikationsprofil des Projektfiles dargestellt. Die Planungsdaten umfassen insbesondere die Konstruktionsdaten, die Lichtberechnungsdaten und die Planungsdatei, wie in der Planungsphase der Anlage festgelegt. Die Temperaturprofile können sich auf eine Temperatur der betreffenden elektronischen Komponente selbst sowie auf eine Umgebungstemperatur beziehen. Ferner werden auch Temperaturschwankungen aufgezeichnet, um Auffälligkeiten in Temperatureinstellungen der Anlage vorzeitig erkennen zu können.

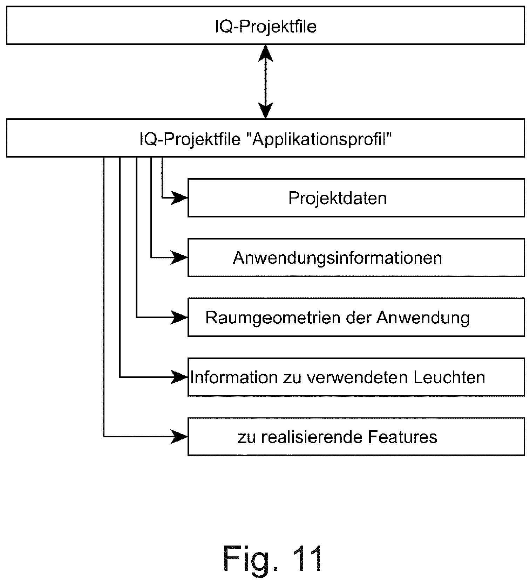

Im Teil des Projektfiles betreffend der Schnittstellen werden insbesondere die Signalqualität und die Signalstärke von sowohl den Steuerleitungen als auch der Netzspannungsversorgung aufgezeichnet. Die Daten dienen dazu, um eine Fehleranalyse im Hinblick auf mögliche Datenübertragungsfehler oder Ausfälle von Komponenten wegen einem instabilen Versorgungsnetz durchführen zu können. Schließlich sind in Figur 11 die Merkmale eins Applikationsprofils dargestellt. Diese Daten beziehen sich auf Auswertungen der Planungsphase, in welcher die Projektdaten, die Anwendungsinformationen, die Raumgeometrie, die Informationen der zu verwendenden Leuchten und der zu realisierenden Features festgelegt sind. Diese Daten können auch noch während des Betriebs der Anlage verändert werden, wenn die Anlage umkonzipiert wird. Beispielsweise können durch Gebäudeneubauten oder durch sonstige Veränderungen der Anlage auch noch die Projektdaten geändert werden.

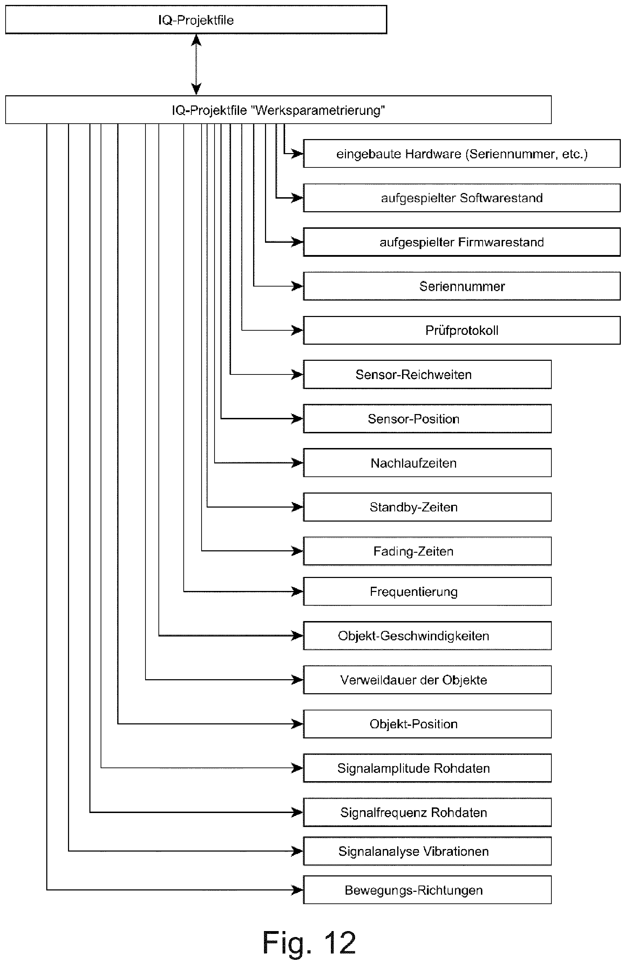

Figur 12 zeigt den Teil des Projektfiles betreffend die Werksparametrierung. Alle Daten der Einstellungen der verbauten Hardware werden in diesem Teil des Projektfiles aufgezeichnet.

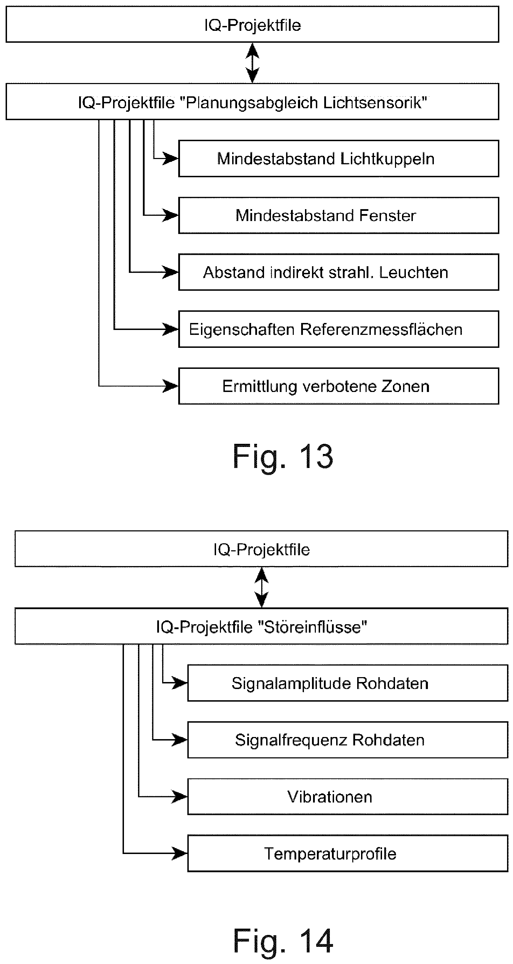

Die in Figur 13 dargestellten Daten des Projektfiles beziehen sich auf den Planungsabgleich der Lichtsensorik. Alle bei der Planung der Anlage erhobenen Parameter, insbesondere der Ort und die Abmessungen der natürlichen Lichtquellen, z.B. Lichtkuppeln und Fenster, sowie die Eigenschaften der zu beleuchtenden Referenzflächen (z.B. matte oder glänzende Oberflächen etc.) sowie die Ermittlung der zusätzlichen Störquellen, die durch stark reflektierende Flächen oder Lichtquellen hervorgerufen werden können, sind in dem Projektfile gespeichert. In Figur 14 sind die Teile des Projektfiles dargestellt, welche Datenaufzeichnungen von möglichen Störeinflüssen beinhalten. Es können mögliche Vibrationen, Temperaturprofile, sowie die Rohdaten von Signalamplituden und Signalfrequenzen aufgezeichnet werden, um eine mögliche Fehleranalyse der Anlage im Betrieb der Anlage zu ermöglichen.

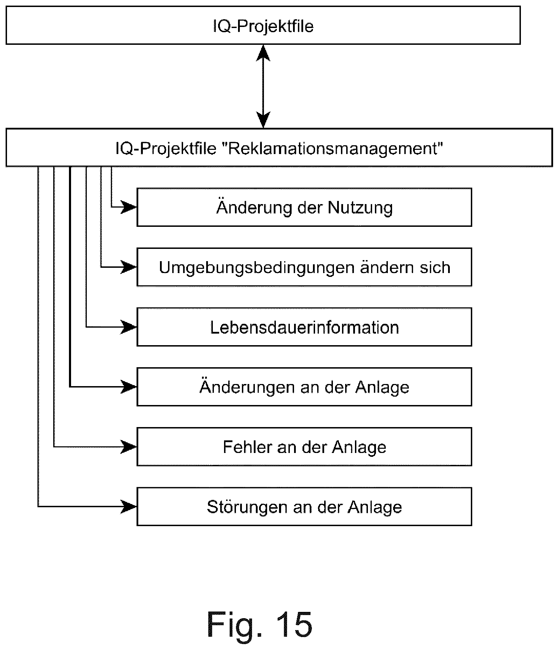

Schließlich ist in Bezug auf Figur 15 ein Bereich des Projektfiles dargestellt, welcher zur Ausführung eines Reklamationsmanagement dient. In dem Projektfile werden Änderungen der Nutzung von Systemkomponenten, sich ändernde Umgebungsbedinungen, Lebensdauerinformationen, Änderungen in der Anlage sowie Fehler und Störungen in der Anlage aufgezeichnet. Beim Eingehen einer Reklamation des Betreibers der Anlage gegen den Hersteller kann aus diesen Daten auf die Ursache der möglichen Fehler oder Störungen geschlossen werden. Wenn sich aus den Daten ergibt, dass die betreffenden schadhaften Systemkomponenten unter veränderten Bedingungen betrieben wurden, z.B. weil eine Produktionshalle anstelle von Raumtemperatur eine Temperatur im Bereich von 60°C aufweist, können Garantieansprüche abgewehrt werden. Die Daten aus der Blockchain erlauben es dem Hersteller nachzuweisen, dass die Systemkomponenten nicht unter der Spezifikation, wie in der Planungsphase festgelegt, betrieben worden sind und daher der Garantieanspruch verwirkt sein kann.

Die vorhergehend beschriebenen Teile des Projektfiles in der Blockchain sind nicht abschließend. Es können weitere Daten erhoben. Es kann allerdings auch vorgesehen sein, dass nur Teile der Daten erhoben werden.

Mögliche Anwendung finden das Verfahren, das Computerprogramm und das Netzwerk der Erfindung in vielen Bereichen. Die Netzwerkkomponenten lassen sich an vielen Orten verbauen, z.B. an oder in einer anderen Komponente einer Gebäudeinstallation, in einer Abhängdecke, einer Betondecke, einer Leuchtbauwand, im Erdreich oder Beton. Als Gebäude in dieser Anmeldung werden jede Form von Bauwerken bezeichnet, einschließlich Wohn- und Bürohäusern, Produktionshallen sowie Straßen und Wege. Der Einsatzbereich kann die Sanierung von Bestandsanlagen oder den Neubau betreffen. Die Komponenten können innerhalb der Gebäude oder im Außenbereich der Gebäude verbaut werden.

## Patentansprüche

1. Verfahren zum computergestützten Planen, Einrichten und Überwachen eines Netzwerkes einer Gebäudeinstallation, insbesondere einer Beleuchtungsanlage, das folgende Schritte umfasst:
Erfassen von Planungsdaten für die Einrichtung der Gebäudeinstallation eines Projekts und Speichern der Planungsdaten in einer projektbezogenen Blockchain;
Analysieren der Planungsdaten aus der Blockchain und Ausgabe eines Installationsplans für ein Netzwerk aus einer Vielzahl von Komponenten der Gebäudeinstallation;
nach Annahme des Installationsplans durch einen Benutzer, Ermitteln der zur Gebäudeinstallation benötigten Betriebsmittel und deren Einbauorte, Zuordnen von eindeutigen Betriebsmittelkennzeichnungen den Betriebesmitteln und Speichern der Betriebsmittelkennzeichnungen mit zugehörigen Einbauorten in der Blockchain;
Erstellen einer Bestellliste der benötigten Betriebsmittel aus der Blockchain;
nach erfolgter Einrichtung der Gebäudeinstallation, Speichern von Änderungen an den Betriebsmitteln der Gebäudeinstallation in der Blockchain um den jeweils aktuellen Konfigurationszustand der Betriebsmittel in der Blockchain zu erhalten.

2. Verfahren nach Anspruch 1, welches ferner umfasst:
Speichern von ausgewerteten Sensordaten aus Sensoren, die Teil der Gebäudeinstallation sind, in der Blockchain.

3. Verfahren nach Anspruch 2, welches ferner umfasst:
statistisches Analysieren der Sensordaten aus der Blockchain und Speichern der Analyseergebnisse in der Blockchain.

4. Verfahren nach einem der vorhergehenden Ansprüche, das ferner umfasst:
Erzeugen von elektronischen Benachrichtigungen aus der Blockchain, wobei die Benachrichtigung den aktuellen Konfigurationszustand der Gebäudeinstallation anzeigen.

5. Verfahren nach einem der vorhergehenden Ansprüche, das ferner umfasst:
Durchführen von Selbstfunktionstest von Betriebsmitteln in der Gebäudeinstallation und Speichern des Ergebnisses des Selbstfunktionstest in der Blockchain.

6. Verfahren nach Anspruch 5, das ferner umfasst:
Versenden einer elektronischen Benachrichtigung, welche den aktuellen Funktionszustand von Betriebsmitteln in der Blockchain anzeigt.

7. Verfahren nach einem der vorhergehenden Ansprüche, das ferner umfasst:
Ermitteln eines Energieverbrauchs von Betriebsmitteln oder Gruppen von Betriebsmitteln der Gebäudeinstallation aus gespeicherten Sensordaten der Blockchain.

8. Verfahren nach einem der vorhergehenden Ansprüche, Speichern einer Parametrierung von Betriebsmitteln der Gebäudeinstallation in der Blockchain.

9. Verfahren nach Anspruch 8, Kopieren der Parametrierung von einer Gruppe von Betriebsmitteln der Gebäudeinstallation auf eine andere Gruppe von Betriebsmitteln der Gebäudeinstallation, insbesondere nach Umzügen von Mitarbeitern in einem Gebäude der Gebäudeinstallation.

10. Verfahren nach einem der vorhergehenden Ansprüche, das ferner umfasst:
Fehleranalyse von der Gebäudeinstallation aus Daten der Blockchain, insbesondere Ermittlung von statistischen Auffälligkeiten aus gespeicherten Sensordaten von miteinander in Beziehung stehenden Sensordaten und Funktionszuständen benachbart angeordneten Sensoren und Betriebsmitteln der Gebäudeinstallation, sowie ggf. Erzeugen einer elektronischen Benachrichtigung für eine mögliche Fehlfunktion von Betriebsmittelkomponenten.

11. Verfahren nach einem der vorhergehenden Ansprüche, das ferner umfasst:
Erzeugen von Benachrichtigungen für Servicemitarbeiter zur Durchführung von regelmäßigen oder außerplanmäßigen Serviceintervallen aus den Daten der Blockchain.

12. Verfahren nach einem der vorhergehenden Ansprüche, das ferner umfasst:
Speichern von Daten in der Blockchain, wobei die Daten eines oder mehreres aus folgender Gruppe umfassen:
Lichtmessung, Temperaturmessung insbesondere von Komponenten der Gebäudeinstallation, Bewegungserfassung, Bewegungssignalqualität, Kommunikationssignalqualität, Betriebszähler von Komponenten der Gebäudeinstallation, Störsignale auf einem Versorgungsnetz der Gebäudeinstallation, Umgebungsbedingungen, insbesondere Feuchtigkeit, flüchtige organisierte Verbindungen und Umgebungstemperatur, mechanische Erschütterungen, sowie Ergebnisse automatischer Funktionstest von Komponenten der Gebäudeinstallation.

13. Verfahren nach einem der vorhergehenden Ansprüche, wobei die Blockchain in einer Datenbank einer Cloud und/oder an mehreren verteilten Orten in Kopien gespeichert wird.

14. Verfahren nach einem der vorhergehenden Ansprüche, wobei die Daten in der Blockchain verschlüsselt gespeichert werden, so dass nur autorisierte Benutzer der Blockchain, insbesondere der Hersteller, der Betreiber und/oder Servicetechniker der Gebäudeinstallation, Zugang zu den Daten der Blockchain oder nur jeweils auf Teile der Daten der Blockchain Zugang haben.

15. Computerprogramm, welches dazu eingerichtet ist, ein Verfahren nach einem der vorhergehenden Ansprüche auszuführen.

16. Netzwerk einer Gebäudeinstallation, welche dazu eingerichtet ist, ein Verfahren nach einem der Ansprüche 1 bis 14 auszuführen.
